(19) Europäisches Patentamt
European Patent Office
Office européen des brevets

(11) **EP 4 779 938 A1**

(12) **EUROPEAN PATENT APPLICATION**
published in accordance with Art. 153(4) EPC

(43) Date of publication:
**22.07.2026 Bulletin 2026/30**

(21) Application number: **23953631.1**

(22) Date of filing: **28.09.2023**

(51) International Patent Classification (IPC):
**H04L 27/26** $^{(2006.01)}$ **H04W 72/12** $^{(2023.01)}$

(52) Cooperative Patent Classification (CPC):
**H04L 27/26; H04W 72/12**

(86) International application number:
**PCT/CN2023/122491**

(87) International publication number:
**WO 2025/065482 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
• **MA, Qianli**
  **Shenzhen, Guangdong 518129 (CN)**
• **HUANG, Huang**
  **Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **PILOT TRANSMISSION METHOD AND APPARATUS**

(57) This application discloses a pilot transmission method and an apparatus. The method includes: generating N pilot symbols, where a plurality of pilot symbols in the N pilot symbols are generated based on at least one Gray complementary sequence pair, each of the at least one Gray complementary sequence pair includes at least two Gray complementary sequences, and N is a positive integer greater than 1; and outputting the N pilot symbols. In this solution, the pilot symbol is generated based on the Gray complementary sequence pair, so that a finally sent pilot signal can have a low PAPR, and have good flatness in frequency domain. This helps improve channel estimation quality.

[FIG. 3]

Generate N pilot symbols, where a plurality of pilot symbols in the N pilot symbols are generated based on at least one Gray complementary sequence pair, and N is a positive integer greater than 1 — S301

Output the N pilot symbols — S302

**Description**

TECHNICAL FIELD

This application relates to the field of communication technologies, and in particular, to a pilot transmission method and an apparatus.

BACKGROUND

Currently, most wireless communication systems generate pilot signals based on a Gold (Gold) sequence or a Zadoff-Chu (Zadoff-Chu, ZC) sequence. The pilot signal generated based on the Gold sequence has a feature of a low peak-to-average power ratio (peak-to-average power ratio, PAPR), but has poor flatness in frequency domain, that is, there are signals with low signal energy on some subcarriers. When a receive end performs channel estimation, signal-to-noise ratios of these subcarriers are very low, and channel estimation quality is poor. The pilot signal generated based on the ZC sequence has good flatness in frequency domain, but has a high PAPR. The pilot signal may be distorted after being amplified by a power amplifier, and consequently, the receive end cannot correctly parse the pilot signal.

How to achieve both a low PAPR and frequency domain flatness of the pilot signal to further improve the channel estimation quality is an urgent technical problem to be resolved.

SUMMARY

This application provides a pilot transmission method and an apparatus, to generate a pilot symbol based on a Gray complementary sequence pair, so that a pilot signal has a low PAPR and frequency domain flatness, and therefore, channel estimation quality is improved.

According to a first aspect, a pilot transmission method is provided. The method may be performed by a first communication device. Unless otherwise specified, the "first communication device" in this application may refer to the first communication device (for example, a network device or a terminal device), may be a component (for example, a processor, a chip, or a chip system) in the first communication device, or may be a logic module or software that can implement all or a part of functions of the first communication device. The method includes: generating N pilot symbols, where a plurality of pilot symbols in the N pilot symbols are generated based on at least one Gray complementary sequence pair, each of the at least one Gray complementary sequence pair includes at least two Gray complementary sequences, and N is a positive integer greater than 1; and outputting the N pilot symbols.

In the foregoing solution, the pilot symbol is generated based on the Gray complementary sequence pair, so that a finally sent pilot signal can have a low PAPR, and have good flatness in frequency domain. This helps improve channel estimation quality.

In a possible design, the Gray complementary sequence is a binary Gray complementary sequence. Compared with a quaternary Gray complementary sequence or a multi-ary Gray complementary sequence, the binary Gray complementary sequence may make a PAPR of a pilot signal lower. In a possible design, Gray complementary sequences carried in at least two adjacent pilot symbols in the N pilot symbols form a Gray complementary sequence pair.

In this design manner, it is constrained that the Gray complementary sequences carried in the adjacent pilot symbols form the Gray complementary sequence pair, so that processing complexity of a transmitter and a receiver can be reduced.

In a possible design, that the plurality of pilot symbols in the N pilot symbols are generated based on the at least one Gray complementary sequence pair includes: A plurality of pilot symbols corresponding to a same antenna port in the N pilot symbols are generated based on the at least one Gray complementary sequence pair.

In this design manner, a case of a plurality of antenna ports is considered, and therefore, the solution offers higher applicability.

In a possible design, a Gray complementary sequence carried in an $(i-1)^{th}$ pilot symbol in the N pilot symbols and a Gray complementary sequence carried in an $i^{th}$ pilot symbol form a first Gray complementary sequence pair, and the Gray complementary sequence carried in the $i^{th}$ pilot symbol in the N pilot symbols and a Gray complementary sequence carried in an $(i+1)^{th}$ pilot symbol form a second Gray complementary sequence pair, where the at least one Gray complementary sequence pair includes the first Gray complementary sequence pair and the second Gray complementary sequence pair, and i is a positive integer.

In this design manner, it is constrained that a Gray complementary sequence carried in any pilot symbol forms Gray complementary sequence pairs with a Gray complementary sequence carried in a previous pilot symbol and a Gray complementary sequence carried in a next pilot symbol. After a $1^{st}$ pilot symbol is determined, all subsequent pilot symbols may be sequentially generated based on a previous pilot symbol, so that the processing complexity of the transmitter and the receiver can be reduced.

In a possible design, a Gray complementary sequence carried in an (i-1)th pilot symbol in the N pilot symbols and a Gray complementary sequence carried in an ith pilot symbol form a third Gray complementary sequence, a Gray complementary sequence carried in an (i+1)th pilot symbol in the N pilot symbols and a Gray complementary sequence carried in an (i+2)th pilot symbol form a fourth Gray complementary sequence, and the Gray complementary sequence carried in the ith pilot symbol and the Gray complementary sequence carried in the (i+1)th pilot symbol do not form a Gray complementary sequence pair, where i is a positive integer.

In this design manner, it is constrained that a Gray complementary sequence carried in any pilot symbol and a Gray complementary sequence carried in a previous or next pilot symbol form a Gray complementary sequence pair, so that types of Gray complementary sequences carried in the N pilot symbols are more flexible, and a probability that different cells use a same pilot symbol is lower, and therefore, inter-cell interference can be reduced.

In a possible design, the N pilot symbols further include a first pilot symbol; and the first pilot symbol carries a Gold (Gold) sequence; or a Gray complementary sequence carried in the first pilot symbol and a Gray complementary sequence carried in a previous or next pilot symbol adjacent to the first pilot symbol form a Gray complementary sequence pair.

In this design manner, a processing manner of another pilot symbol is considered, and therefore, reliability of the solution is improved.

In a possible design, the N pilot symbols are located in a first sub-block, and the first sub-block corresponds to a segment of time-domain resources and/or frequency-domain resources.

In this design manner, it is constrained that a Gray complementary sequence pair is used to generate a pilot symbol in the sub-block, and therefore, the solution is more flexible.

In a possible design, the N pilot symbols are within a time-domain window (time-domain window, TDW). There is no uplink-downlink switching within the TDW, and/or symbol transmission within the TDW meets requirements for phase continuity and power continuity.

In this design manner, it is constrained that the pilot symbol is generated within the TDW based on the Gray complementary sequence pair. This design manner is applicable to a (joint) channel estimation scenario. Because a plurality of pilot symbols are required in the (joint) channel estimation scenario, a waste of pilot overheads can be avoided.

In a possible design, the N pilot symbols are scheduled through one piece of physical downlink control channel (physical downlink control channel, PDCCH) signaling or downlink control information (downlink control information, DCI) signaling; the N pilot symbols are respectively scheduled through N pieces of PDCCH signaling or DCI signaling; or the N pilot symbols are scheduled through a pieces of PDCCH signaling or DCI signaling, where a is a positive integer less than N. Certainly, the foregoing is merely an example, but this is not limited thereto in practice. In a possible design, the N pilot symbols correspond to a same antenna port.

In a possible design, different pilot symbols in at least two pilot symbols (or at least two pilot symbols carrying Gray complementary sequences that form a Gray complementary sequence pair) generated based on a same Gray complementary sequence pair occupy a same frequency domain bandwidth.

This helps a receive end (for example, a second communication device) of the pilot symbol perform (joint) channel estimation based on the Gray complementary sequence pair, to improve the channel estimation quality.

According to a second aspect, a pilot transmission method is provided. The method may be performed by a second communication device. Unless otherwise specified, the "second communication device" in this application may refer to the second communication device (for example, a network device or a terminal device), may be a component (for example, a processor, a chip, or a chip system) in the second communication device, or may be a logic module or software that can implement all or a part of functions of the second communication device. The method includes: obtaining a to-be-decoded signal, where the to-be-decoded signal includes N pilot symbols, a plurality of pilot symbols in the N pilot symbols are generated based on at least one Gray complementary sequence pair, each of the at least one Gray complementary sequence pair includes at least two Gray complementary sequences, and N is a positive integer greater than 1; and performing channel estimation on the N pilot symbols.

In the foregoing solution, the pilot symbol received by the second communication device is generated based on the Gray complementary sequence pair, has a low PAPR, and has good flatness in frequency domain. Therefore, channel estimation quality can be improved.

In a possible design, the Gray complementary sequence is a binary Gray complementary sequence. In a possible design, Gray complementary sequences carried in at least two adjacent pilot symbols in the N pilot symbols form a Gray complementary sequence pair.

In a possible design, that the plurality of pilot symbols in the N pilot symbols are generated based on the at least one Gray complementary sequence pair includes: A plurality of pilot symbols corresponding to a same antenna port in the N pilot symbols are generated based on the at least one Gray complementary sequence pair.

In a possible design, a Gray complementary sequence carried in an (i-1)th pilot symbol in the N pilot symbols and a Gray complementary sequence carried in an ith pilot symbol form a first Gray complementary sequence pair, and the Gray complementary sequence carried in the ith pilot symbol in the N pilot symbols and a Gray complementary sequence carried in an (i+1)th pilot symbol form a second Gray complementary sequence pair, where the at least one Gray complementary sequence pair includes the first Gray complementary sequence pair and the second Gray complementary sequence pair, and i is a positive integer.

In a possible design, a Gray complementary sequence carried in an $(i-1)^{th}$ pilot symbol in the N pilot symbols and a Gray complementary sequence carried in an $i^{th}$ pilot symbol form a third Gray complementary sequence, a Gray complementary sequence carried in an $(i+1)^{th}$ pilot symbol in the N pilot symbols and a Gray complementary sequence carried in an $(i+2)^{th}$ pilot symbol form a fourth Gray complementary sequence, and the Gray complementary sequence carried in the $i^{th}$ pilot symbol and the Gray complementary sequence carried in the $(i+1)^{th}$ pilot symbol do not form a Gray complementary sequence pair, where i is a positive integer.

In a possible design, the N pilot symbols further include a first pilot symbol; and the first pilot symbol carries a Gold sequence; or a Gray complementary sequence carried in the first pilot symbol and a Gray complementary sequence carried in a previous or next pilot symbol adjacent to the first pilot symbol form a Gray complementary sequence pair.

In a possible design, the N pilot symbols are located in a first sub-block, and the first sub-block corresponds to a segment of time-domain resources and/or frequency-domain resources.

In a possible design, the N pilot symbols are within a TDW. There is no uplink-downlink switching within the TDW, and/or symbol transmission within the TDW meets requirements for phase continuity and power continuity.

In a possible design, the N pilot symbols are scheduled through one piece of PDCCH signaling or DCI signaling; the N pilot symbols are respectively scheduled through N pieces of PDCCH signaling or DCI signaling; or the N pilot symbols are scheduled through a pieces of PDCCH signaling or DCI signaling, where a is a positive integer less than N.

In a possible design, the N pilot symbols correspond to a same antenna port.

For beneficial effects of the foregoing design manners, refer to the beneficial effects of the corresponding designs in the first aspect. Details are not described again.

According to a third aspect, a communication apparatus is provided. The apparatus includes a module, a unit, or a technical means configured to implement the method according to the first aspect or any one of the optional implementations of the first aspect.

For example, the apparatus may include:

a processing module, configured to generate N pilot symbols, where a plurality of pilot symbols in the N pilot symbols are generated based on at least one Gray complementary sequence pair, each of the at least one Gray complementary sequence pair includes at least two Gray complementary sequences, and N is a positive integer greater than 1; and a transceiver module, configured to output the N pilot symbols.

According to a fourth aspect, a communication apparatus is provided. The apparatus includes a module, a unit, or a technical means configured to implement the method according to the second aspect or any one of the optional implementations of the second aspect.

For example, the apparatus may include:

a transceiver module, configured to obtain a to-be-decoded signal, where the to-be-decoded signal includes N pilot symbols, a plurality of pilot symbols in the N pilot symbols are generated based on at least one Gray complementary sequence pair, each of the at least one Gray complementary sequence pair includes at least two Gray complementary sequences, and N is a positive integer greater than 1; and a processing module, configured to perform channel estimation on the N pilot symbols.

According to a fifth aspect, a communication apparatus is provided. The apparatus includes a processor and an interface circuit, the interface circuit is electrically coupled to the processor, and the processor performs, through a logic circuit or by executing code instructions, the method according to the first aspect or any one of the optional implementations of the first aspect or the method according to the second aspect or any one of the optional implementations of the second aspect.

According to a sixth aspect, a computer-readable storage medium is provided. The storage medium stores a computer program or instructions, and when the computer program or the instructions are run, the method according to the first aspect or any one of the optional implementations of the first aspect is performed, or the method according to the second aspect or any one of the optional implementations of the second aspect is performed.

According to a seventh aspect, a computer program product is provided, including instructions. When the instructions are run on a computer, the method according to the first aspect or any one of the optional implementations of the first aspect is performed, or the method according to the second aspect or any one of the optional implementations of the second aspect is performed.

BRIEF DESCRIPTION OF DRAWINGS

FIG. 1 is a flowchart of processing a DFT-s-OFDM signal;
FIG. 2 is a diagram of a communication system applicable to embodiments of this application;
FIG. 3 is a flowchart of a pilot transmission method according to an embodiment of this application;
FIG. 4A and FIG. 4B are diagrams of pilot symbols;
FIG. 5A and FIG. 5B are diagrams of time-frequency domain properties of Gray complementary sequences;
FIG. 6A to FIG. 6H are diagrams of pilot symbols;
FIG. 7 is a flowchart of another pilot transmission method according to an embodiment of this application;
FIG. 8 is a diagram of (joint) channel estimation;
FIG. 9 is a diagram of a structure of a communication apparatus according to an embodiment of this application; and
FIG. 10 is a diagram of a structure of another communication apparatus according to an embodiment of this application.

DESCRIPTION OF EMBODIMENTS

For ease of understanding of technical solutions provided in embodiments of this application, the following explains and describes technical terms used in embodiments of this application.

(1) Single-carrier and multi-carrier:

Single-carrier refers to convolving serially arranged transmit signals to a roll-off filter to form a transmit signal. Multi-carrier refers to arranging transmit signals in parallel and forming a transmit signal through inverse fast Fourier transform (inverse fast Fourier transform, IFFT).

For example, a single-carrier waveform may be a single carrier-quadrature amplitude modulation (single carrier-quadrature amplitude modulation, SC-QAM) waveform, and a multi-carrier waveform may be an orthogonal frequency division multiplexing (orthogonal frequency division multiplexing, OFDM) waveform. In addition, a discrete Fourier transformation-spread-orthogonal frequency division multiplexing (discrete Fourier transformation-spread-orthogonal frequency division multiplexing, DFT-s-OFDM) waveform is almost equivalent to a conventional single-carrier waveform, but the DFT-s-OFDM waveform uses a multi-carrier implementation, and therefore is easy to be compatible with OFDM. However, the DFT-s-OFDM waveform is still a single-carrier waveform in essence.

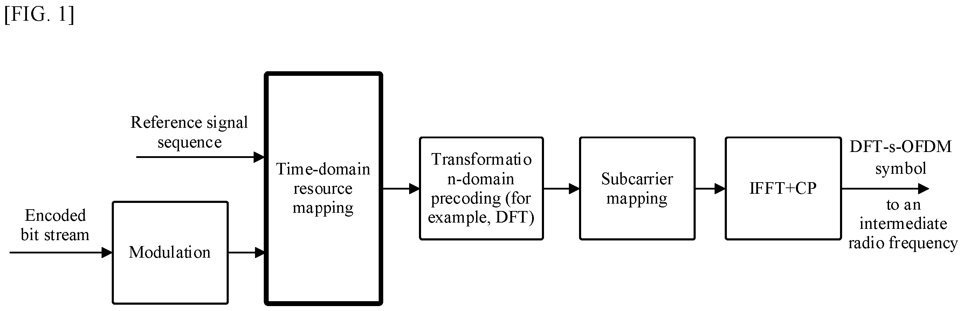

FIG. 1 is a flowchart of processing a signal of transmitter of a network device or a terminal device when the network device communicates with the terminal device by using a DFT-s-OFDM waveform.

As shown in FIG. 1, the transmitter modulates an encoded bitstream to obtain a modulated data sequence. The transmitter performs time-domain resource mapping on a reference signal sequence and the modulated sequence (that is, determines a time-domain resource for each sequence, for example, determines an OFDM symbol that carries each sequence). For example, the reference signal sequence is at least one of a demodulation reference signal (Demodulation Reference Signal, DMRS) sequence, a phase tracking reference signal (phase tracking reference signal, PTRS) sequence, a tracking reference signal (tracking reference signal, TRS) sequence, or a channel state information reference signal (channel state information reference signal, CSI-RS) sequence. The transmitter performs a transformation-domain encoding (for example, discrete Fourier transformation (discrete Fourier transformation, DFT)) operation on a sequence obtained through time-domain resource mapping, to transform the sequence to a frequency domain, performs subcarrier mapping (for example, mapping to a resource element (resource element, RE)) on a sequence obtained through DFT, performs IFFT on a sequence obtained through subcarrier mapping, and superimposes a cyclic prefix (cyclic prefix, CP), so that a DFT-s-OFDM sequence can be obtained.

A process of a receiver is opposite to that of the transmitter. For example, after obtaining the DFT-s-OFDM sequence, the receiver removes the superposed CP from the sequence, and performs operations such as FFT, subcarrier demapping, and IDFT, to recover the reference signal sequence, the encoded bit stream, and the like.

It may be understood that related operations in FIG. 1 are merely used as an example. Optionally, another possible operation, for example, at least one of frequency domain spectrum shaping, serial-to-parallel conversion, parallel-to-serial conversion, digital-to-analog converter (digital-to-analog-converter, DAC), power amplifier (power amplifier, PA), low noise amplifier (low noise amplifier, LNA), analog-to-digital converter (analog-to-digital converter, ADC), and the like, may be further included.

(2) PAPR:

A radio signal is a sine wave with a continuously changing amplitude in time domain, and the amplitude is not constant. An amplitude peak of the signal in one cycle is different from that in another cycle. Therefore, average power and peak power in each cycle vary. Within a long time period, the peak power is maximum transient power that occurs with a probability, and the probability is usually 0.01% (namely, 10^-4). A ratio of peak power under this probability to total average power of a system is the PAPR.

(3) Gray complementary sequence pair:

For two sequences a = ($a_0$, $a_1$, $a_2$, ..., $a_{n-1}$) and b = ($b_0$, $b_1$, $b_2$, ..., $b_{n-1}$) whose lengths are n, it is assumed that:

$$G_a(j) = \sum_{k=0}^{n-1-j} a_k a_{k+j}$$

If the sequence a and the sequence b meet the following requirement, the sequence a and the sequence b form a Gray complementary sequence pair (namely, a pair of Gray complementary sequences), where a is a Gray complementary sequence, and b is a Gray complementary sequence:

For any 0 < j < n - 1, $G_a(j)$ + $G_b(j)$ = 0; and when j = 0, $G_a(j)$ + $G_b(j)$ = 2n.

In other words, in a Gray complementary sequence pair, when j is not 0, autocorrelation of two sequences is 0, and when j is 0, the autocorrelation of the two sequences is 2n.

It may be understood that, for the sequence a, in addition to the sequence b, another sequence and sequence a may meet the foregoing requirement. For the sequence b, in addition to the sequence a, another sequence and the sequence b may meet the foregoing requirement. Therefore, there may be two or more Gray complementary sequences in one Gray complementary sequence pair.

Based on a type of an element included in the Gray complementary sequence, the Gray complementary sequence may be classified into a binary Gray complementary sequence, a quaternary Gray complementary sequence, a multi-ary Gray complementary sequence, and the like.

(4) "A plurality of" in embodiments of this application means two or more. The term "and/or" describes an association relationship for describing associated objects and indicates that three relationships may exist. For example, A and/or B may indicate the following three cases: Only A exists, both A and B exist, and only B exists. The character "/" generally indicates an "or" relationship between the associated objects. In addition, it should be understood that, although terms such as "first" and "second" may be used in embodiments of the present invention to describe objects, these objects should not be limited by these terms. These terms are merely used to distinguish between the objects.

Terms "include", "have", and any variants thereof in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in embodiments of this application, the term "example" or "for example" indicates giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner.

The following explains and describes the technical solutions provided in embodiments of this application with reference to the accompanying drawings.

The technical solutions in embodiments of this application may be applied to various communication systems, for example, a 5th generation (5th generation, 5G) mobile communication system such as a new radio (new radio, NR) system, a 6th generation (6th generation, 6G) mobile communication system, a universal mobile communications system (universal mobile telecommunications system, UMTS), a wireless local area network (wireless local area network, WLAN), a wireless fidelity (wireless fidelity, Wi-Fi) system, and another future evolved communication system.

Embodiments of this application may be applied to the following scenarios: enhanced mobile broadband (enhanced mobile broadband, eMBB), multi-station transmission (signal transmission between a same terminal device and a plurality of stations), a backhaul scenario, wireless to the x (wireless to the x, WTTx), device to device (device to device, D2D), or another scenario that has a high requirement on timing or a high requirement on a transmission rate.

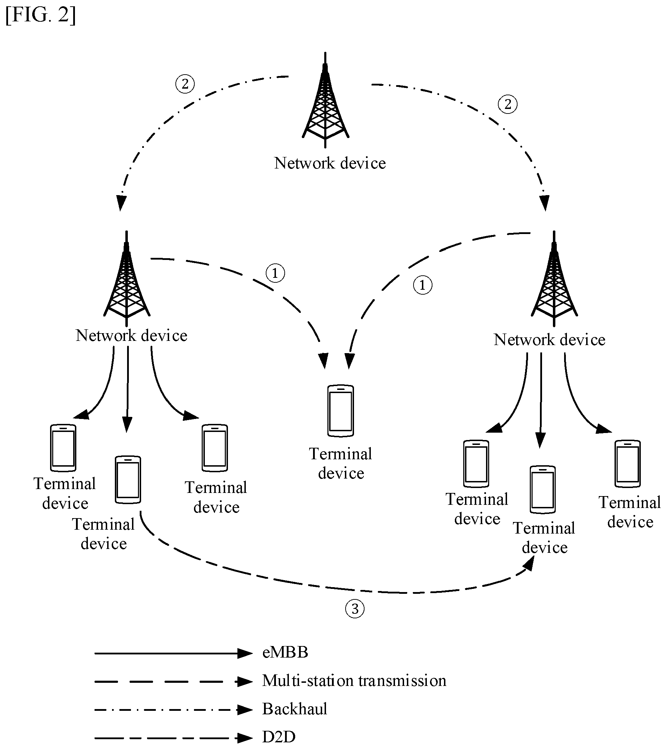

For example, FIG. 2 is a diagram of a communication system applicable to embodiments of this application. As shown in FIG. 2, the communication system may include one or more network devices and one or more terminal devices. An interface between the network device and the terminal device may be a Uu interface (or referred to as an air interface), and data transmission may be performed between the network device and the terminal device via an air interface resource.

FIG. 2 shows examples of scenarios to which embodiments of this application are applicable: eMBB (shown by a solid line in FIG. 2), multi-station transmission (shown by a dashed line ① in FIG. 2), a backhaul scenario (shown by a dashed line ② in FIG. 2), and D2D (shown by a dashed line ③ in FIG. 2). It should be understood that four scenarios shown in FIG. 2 are merely examples. This is not limited in embodiments of this application.

The network device may be a base station (base station), an evolved NodeB (evolved NodeB, eNodeB), a transmission reception point (transmission reception point, TRP), a next-generation NodeB (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like; or may be a module or unit that completes a part of functions of the base station, for example, may be a central unit (central unit, CU) or a distributed unit (distributed unit, DU). An access network device may be a macro base station (for example, 110a in FIG. 2), may be a micro base station or an indoor base station (for example, 110b in FIG. 2), or may be a relay node, a donor node, or the like. A specific technology and a specific device form that are used by the access network device are not limited in embodiments of this application. In this embodiment of this application, a base station is used as an example of the access network device for description.

In a possible scenario, a plurality of RAN nodes cooperatively assist a terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an open radio access network (open radio access network, O-RAN, open RAN, or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit among the CU (or the CU-CP or the CU-UP), the DU, and the RU in this application may be implemented by using a software module, a hardware module, or a combination of a software module and a hardware module.

The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, and smart city. The terminal device may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in embodiments of this application.

The base station and the UE may be at fixed positions, or may be movable. The base station and the UE may be deployed on land, including an indoor or outdoor scenario, and a handheld or vehicle-mounted scenario; may be deployed on water; or may be deployed on an airplane, a balloon, and an artificial satellite in the air. Application scenarios of the base station and the UE are not limited in embodiments of this application.

Communication between a base station and UE, between base stations, and between UE and UE may be performed through a licensed spectrum, may be performed through an unlicensed spectrum, or may be performed through both a licensed spectrum and an unlicensed spectrum; or may be performed through a spectrum below 6 gigahertz (gigahertz, GHz), may be performed through a spectrum above 6 GHz, or may be performed through both a spectrum below 6 GHz and a spectrum above 6 GHz. A spectrum resource used for wireless communication is not limited in embodiments of this application.

The communication system and a scenario described in embodiments of this application are intended to describe the technical solutions in embodiments of this application more clearly, and do not constitute a limitation on the technical solutions provided in embodiments of this application. A person of ordinary skill in the art may learn that, with evolution of network architectures and emergence of new service scenarios, the technical solutions provided in embodiments of this application are also applicable to similar technical problems.

In this embodiment of this application, a waveform used for communication between the network device and the terminal device may be a single-carrier waveform, or may be a multi-carrier waveform. In this embodiment of this application, a DFT-s-OFDM waveform is used as an example for description.

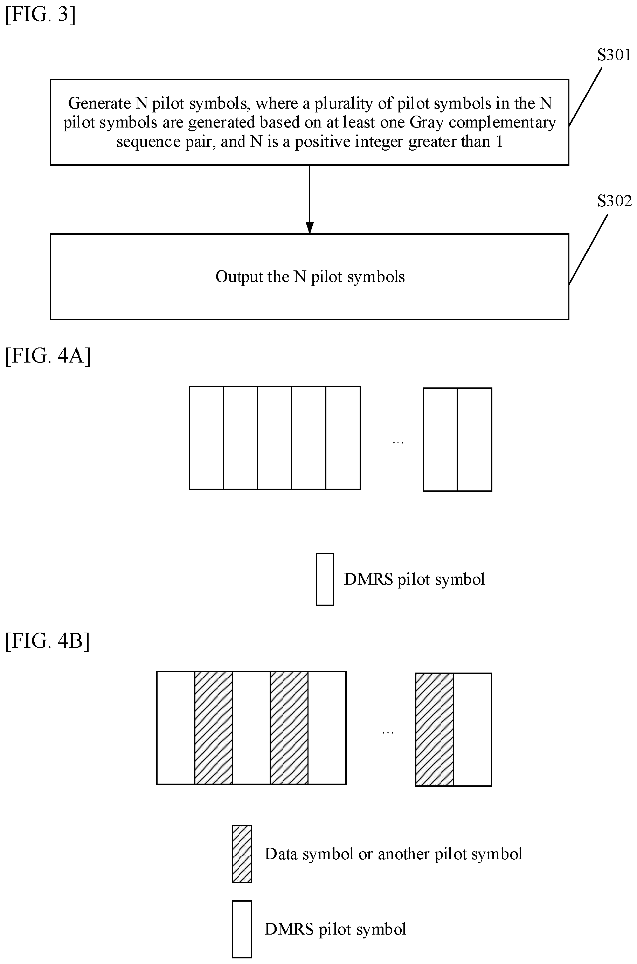

FIG. 3 shows a pilot transmission method according to an embodiment of this application. The method may be applied to the communication system shown in FIG. 2. The method may be performed by a first communication device.

Unless otherwise specified, the "first communication device" in this application may refer to the first communication device (for example, the network device or the terminal device shown in FIG. 2), may be a component (for example, a processor, a chip, or a chip system) in the first communication device, or may be a logic module or software that can implement all or a part of functions of the first communication device. The method includes the following steps.

S301: Generate N pilot symbols.

A plurality of pilot symbols in the N pilot symbols are generated based on at least one Gray complementary sequence pair, and N is a positive integer greater than 1. In other words, generating the N pilot symbols includes: generating the plurality of pilot symbols in the N pilot symbols based on the at least one Gray complementary sequence pair.

Each of the at least one Gray complementary sequence pair includes at least two Gray complementary sequences, or at least two Gray complementary sequences form a Gray complementary sequence pair. For a concept of the Gray complementary sequence pair, refer to the foregoing descriptions.

In some embodiments, that the plurality of pilot symbols in the N pilot symbols are generated based on the at least one Gray complementary sequence pair may also be described as: Sequences carried in the plurality of pilot symbols in the N pilot symbols are generated based on the at least one Gray complementary sequence pair; sequences carried in the plurality of pilot symbols in the N pilot symbols are determined based on the at least one Gray complementary sequence pair; or Gray complementary sequences carried in the plurality of pilot symbols in the N pilot symbols form the at least one Gray complementary sequence pair. For example, the sequences carried in the plurality of pilot symbols in the N pilot symbols include the at least one Gray complementary sequence pair, or the sequences carried in the plurality of pilot symbols in the N pilot symbols are variants of the at least one Gray complementary sequence pair.

For example, Gray complementary sequences A and B form a Gray complementary sequence pair, and a pilot symbol #1 and a pilot symbol #2 are generated based on the Gray complementary sequences A and B.

(1) Generate the pilot symbol #1 on a 1st symbol (for example, an OFDM symbol): The pilot symbol #1 uses the Gray complementary sequence A whose length is X. For example, A=[1, 1, 1, 1, -1, 1, -1, -1, -1, 1, 1, -1, -1, 1, 1, -1, 1, -1, -1, 1].

It may be understood that, an example in which an example of the Gray complementary sequence in this specification is a binary Gray complementary sequence is used. This is not limited thereto. The Gray complementary sequence may alternatively be a quaternary Gray complementary sequence, a multi-ary Gray complementary sequence, or the like. This is not limited. It may be understood that, compared with the quaternary Gray complementary sequence or the multi-ary Gray complementary sequence, the binary Gray complementary sequence may make a PAPR of a pilot signal lower.

Optionally, if the length X of the Gray complementary sequence A is not equal to a length Y of an actual transmission bandwidth, an operation of adding a redundant signal (for example, adding 0 or adding repeated information) may be performed on the sequence. For example, if the length of the Gray complementary sequence A is 20, but the actual transmission bandwidth is 24 (2 RBs), four redundant signals need to be added.

For example, four 0s are added: The 0s may be added in front of or behind the sequence A, or at equally spaced positions within the sequence A, to obtain a sequence A' whose length is Y: A'=[0 ... A]; A'=[A ... 0]; or A'=[A1 0 A2 0 ... A(N-1) 0].

Alternatively, for example, the sequence A is partially copied (four pieces of information is copied), to obtain a sequence whose length is Y: A'=[A(N-L+1:end) A]; or A'=[A A(1:L)].

(2) Generate the pilot symbol #2 on a 2nd symbol: The pilot symbol #2 uses the Gray complementary sequence B that is complementary to A. For example, B=[1, 1, 1, 1, -1, 1, 1, 1, 1, 1, -1, -1, -1, 1, -1, 1, -1, 1, 1, -1].

Similarly, if a length X of the Gray complementary sequence B is not equal to the length Y of the actual transmission bandwidth, the operation of adding the redundant signal (for example, adding 0 or adding repeated information) may be performed on the sequence.

The foregoing uses an example of generating two pilot symbols. For a manner of generating more pilot symbols, refer to a manner of generating the pilot symbol #1 and the pilot symbol #2. Details are not described herein again.

In this embodiment of this application, pilot symbol types of the N pilot symbols may be any one of demodulation reference signal (Demodulation Reference Signal, DMRS) pilot symbols, phase tracking reference signal (phase tracking reference signal, PTRS) pilot symbols, tracking reference signal (tracking reference signal, TRS) pilot symbols, channel state information reference signal (channel state information reference signal, CSI-RS) pilot symbols, or the like. For ease of description, the following uses an example in which the pilot symbol types of the N pilot symbols are DMRS pilot symbols.

In some embodiments, any two adjacent pilot symbols in the N pilot symbols may be consecutive in time domain, that is, there is no other symbol between the two adjacent pilot symbols, as shown in FIG. 4A.

In some other embodiments, any two adjacent pilot symbols in the N pilot symbols may alternatively be non-consecutive in time domain, that is, there may be another symbol between the two adjacent pilot symbols. For example, there is a data symbol or another pilot symbol between the two adjacent pilot symbols, as shown in FIG. 4B. When the N pilot symbols are DMRS pilot symbols, the another pilot symbol includes but is not limited to at least one of a PTRS pilot symbol, a TRS pilot symbol, a CSI-RS pilot symbol, or the like.

S301 may be further described as: generating the N pilot symbols in the M pilot symbols, where the plurality of pilot symbols in the N pilot symbols are generated based on the at least one Gray complementary sequence pair, each of the at least one Gray complementary sequence pair includes at least two Gray complementary sequences, N is a positive integer greater than 1, M is a positive integer greater than or equal to N, and N is a positive integer.

S302: Output the N pilot symbols.

The output pilot symbol herein may be a pilot symbol obtained through time-domain resource mapping, or may be a pilot symbol obtained through processing such as DFT, subcarrier mapping, or IFFT. This is not limited in this application. Outputting the N pilot symbols may be outputting the N pilot symbols to one processing unit (for example, an intermediate radio frequency), or may be sending the N pilot symbols through a carrier.

In a specific example, a processing process of the first communication device may include the following steps.

(1) The first communication device generates pilot information (for example, a pilot sequence) based on the actual transmission bandwidth.

(2) Place the pilot information and data information (for example, a data sequence) on a time-domain resource (for example, an OFDM symbol), to ensure that pilot sequences A and B used by two adjacent pilot symbols (the pilot symbol is the OFDM symbol on which the pilot sequence is placed) are a Gray complementary sequence pair. For a specific method, refer to S301.

(3) Perform operations such as DFT, subcarrier mapping, and IFFT on a signal flow generated in step (2) to obtain a final time-domain signal.

(4) Add a CP to the time-domain signal to form a DFT-s-OFDM symbol.

(5) Send the DFT-s-OFDM symbol. This step is an optional step.

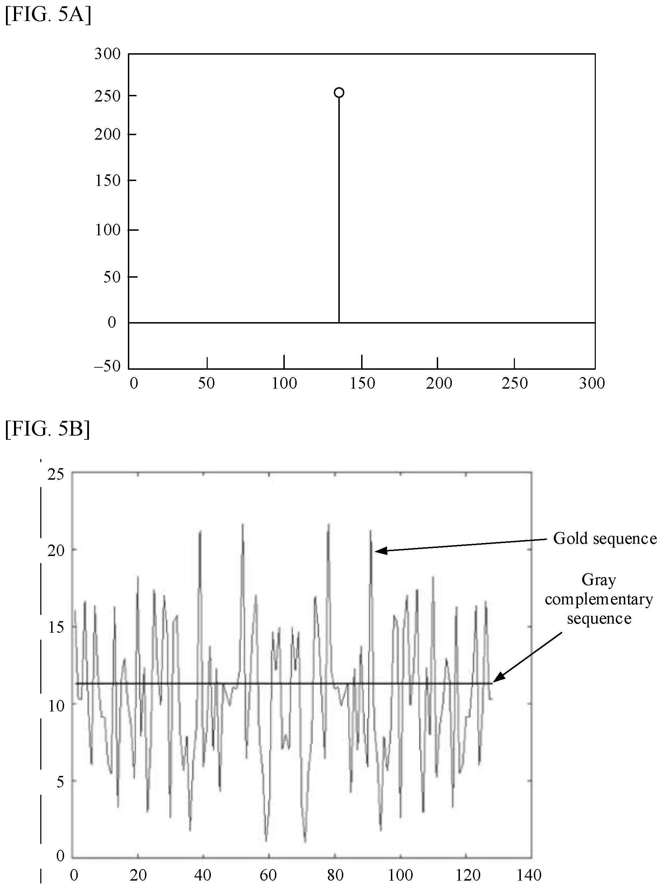

It may be understood that the Gray complementary sequence has a low PAPR property, which is very important for a communication system that requires low PAPR transmission. For a Gold sequence that is a sequence with a low PAPR in a current situation, compared with an existing Gold sequence, the Gray complementary sequence pair has a great advantage in terms of channel estimation performance due to frequency domain flatness. FIG. 5A is a diagram in which an autocorrelation sum of Gray complementary sequences is an impulse response (that is, $G_a(j) + G_b(j)$) from a time-domain perspective. As shown in FIG. 5B, from a frequency domain perspective, this means that a sum of squares of moduli obtained through Fourier transform performed on a Gray complementary sequence is a fixed value (FFT of an impulse response is a constant modulus signal).

Optionally, the first communication device generates the pilot symbol in a pi/2 ($\pi/2$) binary phase shift keying (binary phase shift keying, BPSK) modulation manner, to ensure that a pilot signal generated based on the Gray complementary sequence pair has a low PAPR.

In the foregoing solution, the pilot symbol generated based on the Gray complementary sequence pair can make a finally sent pilot signal have a low PAPR, and have good flatness in frequency domain. Therefore, this helps improve channel estimation quality.

In a possible design, Gray complementary sequences carried in at least two adjacent pilot symbols in the N pilot symbols form a Gray complementary sequence pair.

In some embodiments, that the Gray complementary sequences carried in the at least two adjacent pilot symbols form the Gray complementary sequence pair may also be described as that the at least two adjacent pilot symbols form the Gray complementary sequence pair.

In a specific implementation, Gray complementary sequences carried in any two adjacent pilot symbols in the N pilot symbols form a Gray complementary sequence pair. In other words, a Gray complementary sequence carried in each pilot symbol may form a Gray complementary sequence pair with a Gray complementary sequence carried in a previous pilot symbol adjacent to the pilot symbol, and may further form a Gray complementary sequence pair with a Gray complementary sequence carried in a next pilot symbol adjacent to the pilot symbol.

For example, a Gray complementary sequence carried in an (i-1)th pilot symbol in the N pilot symbols and a Gray complementary sequence carried in an ith pilot symbol form a first Gray complementary sequence pair, and the Gray complementary sequence carried in the ith pilot symbol in the N pilot symbols and a Gray complementary sequence carried in an (i+1)th pilot symbol form a second Gray complementary sequence pair, where the at least one Gray complementary sequence pair includes the first Gray complementary sequence pair and the second Gray complementary sequence pair, and i is a positive integer.

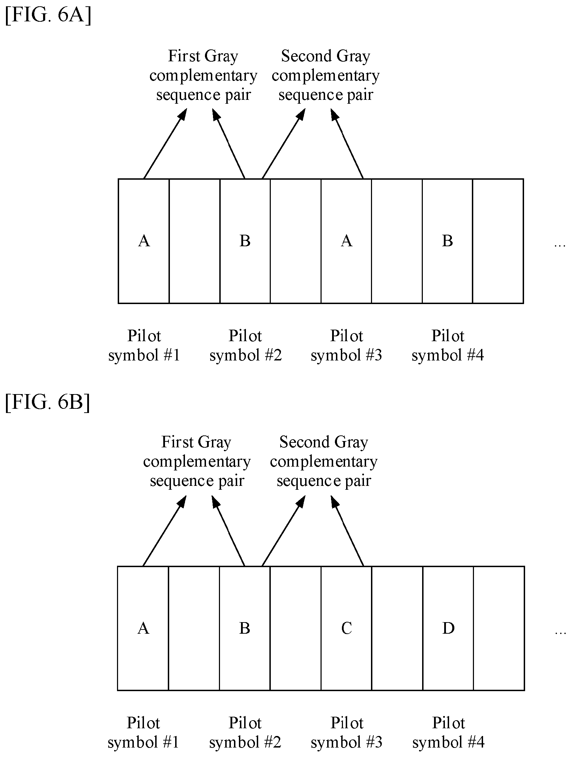

The first Gray complementary sequence pair and the second Gray complementary sequence may be the same. For example, as shown in FIG. 6A, a Gray complementary sequence carried in a pilot symbol #1 is a sequence A, a Gray complementary sequence carried in a pilot symbol #2 is a sequence B, a Gray complementary sequence carried in a pilot symbol #3 is the sequence A, and the sequence A and the sequence B may form a Gray complementary sequence pair.

The first Gray complementary sequence pair and the second Gray complementary sequence may be different.

For example, as shown in FIG. 6B, a Gray complementary sequence carried in a pilot symbol #1 is a sequence A, a Gray complementary sequence carried in a pilot symbol #2 is a sequence B, a Gray complementary sequence carried in a pilot symbol #3 is a sequence C, sequences A and B may form a Gray complementary sequence pair, and sequences B and C may form a Gray complementary sequence pair.

In this implementation, it is constrained that any pilot symbol forms Gray complementary sequence pairs with a previous pilot symbol and a next pilot symbol. After a 1st pilot symbol is determined, all subsequent pilot symbols may be sequentially generated based on a previous pilot symbol, so that processing complexity of a transmitter and a receiver can be reduced.

In another specific implementation, Gray complementary sequences carried in every two adjacent pilot symbols in the N pilot symbols form one Gray complementary sequence pair. In other words, a Gray complementary sequence carried in each pilot symbol forms a Gray complementary sequence pair only with a Gray complementary sequence carried in a previous or next pilot symbol adjacent to the pilot symbol.

For example, a Gray complementary sequence carried in an $(i-1)^{th}$ pilot symbol in the N pilot symbols and a Gray complementary sequence carried in an $i^{th}$ pilot symbol form a third Gray complementary sequence, a Gray complementary sequence carried in an $(i+1)^{th}$ pilot symbol in the N pilot symbols and a Gray complementary sequence carried in an $(i+2)^{th}$ pilot symbol form a fourth Gray complementary sequence, and the Gray complementary sequence carried in the $i^{th}$ pilot symbol and the Gray complementary sequence carried in the $(i+1)^{th}$ pilot symbol do not form a Gray complementary sequence pair, where i is a positive integer.

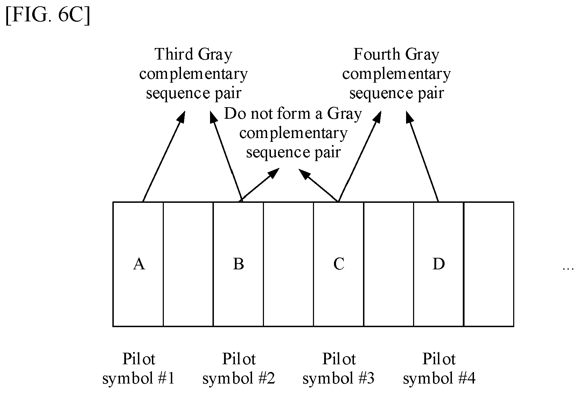

For example, as shown in FIG. 6C, a Gray complementary sequence carried in a pilot symbol #1 is a sequence A, a Gray complementary sequence carried in a pilot symbol #2 is a sequence B, a Gray complementary sequence carried in a pilot symbol #3 is a sequence C, a Gray complementary sequence carried in a pilot symbol #4 is a sequence D, sequences A and B may form a Gray complementary sequence pair, sequences C and D may form a Gray complementary sequence pair, and sequences B and C cannot form a Gray complementary sequence pair.

In this implementation, it is merely constrained that any pilot symbol and a previous or next pilot symbol form a Gray complementary sequence pair, so that types of Gray complementary sequences carried in the N pilot symbols are more flexible, and a probability that different cells use a same pilot symbol is lower, and therefore, inter-cell interference can be reduced.

In a possible design, all the N pilot symbols are generated based on the Gray complementary sequence pair. For example, N=2P, P is a positive integer (that is, N is an even number), Gray complementary sequences carried in every two adjacent pilot symbols form one Gray complementary sequence pair, and a Gray complementary sequence carried in each pilot symbol form a Gray complementary sequence pair only with a Gray complementary sequence carried in a previous or next pilot symbol adjacent to the pilot symbol. In this case, Gray complementary sequences carried in the N pilot symbol exactly form P Gray complementary sequence pairs. In other words, the N pilot symbols are generated based on the P Gray complementary sequence pairs. In another possible design, a part of the N pilot symbols are generated based on the Gray complementary sequence pair. For example, N=2P+1, and P is a positive integer (that is, N is an even number). In 2P pilot symbols, Gray complementary sequences carried in every two adjacent pilot symbols form one Gray complementary sequence pair, and Gray complementary sequences carried in the 2P pilot symbols exactly form P Gray complementary sequence pairs.

For a remaining another part of the pilot symbols, for example, the N pilot symbols further include a first pilot symbol, processing may be performed in any one of the following manners.

Manner 1: The first pilot symbol carries a Gold sequence. In other words, the first pilot symbol is generated based on the Gold sequence (or a sequence carried in the first pilot symbol is generated based on the Gold sequence). The sequence carried in the first pilot symbol may be the Gold sequence or a variant of the Gold sequence.

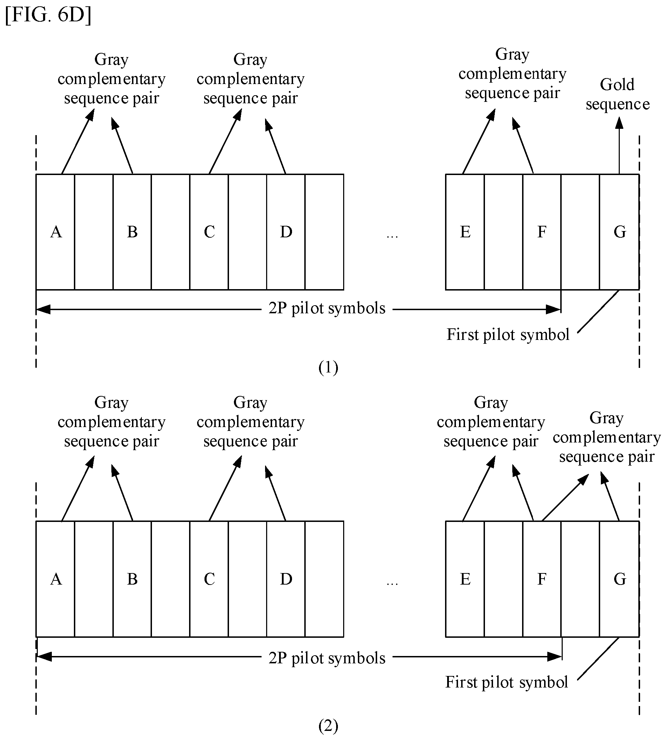

As shown in (1) in FIG. 6D, a sequence G carried in the first pilot symbol is the Gold sequence. Manner 2: A Gray complementary sequence carried in the first pilot symbol and a Gray complementary sequence carried in a previous or next pilot symbol adjacent to the first pilot symbol form a Gray complementary sequence pair.

As shown in (2) in FIG. 6D, a sequence E and a sequence F form a Gray complementary sequence pair, and a sequence G carried in the first pilot symbol may form a Gray complementary sequence pair with the sequence F carried in a previous pilot symbol adjacent to the first pilot symbol.

It may be understood that an example in which the first pilot symbol is the last pilot symbol is used in FIG. 6D, but this is not limited thereto in practice. The first pilot symbol may alternatively be a 1st pilot symbol in the N pilot symbols or a pilot symbol at another position in the N pilot symbols. In addition, a quantity of first pilot symbols is not limited to 1. Alternatively, there may be a plurality of first pilot symbols.

In a possible design, a plurality of pilot symbols corresponding to a same antenna port in the N pilot symbols are generated based on the at least one Gray complementary sequence pair.

It may be understood that, when all the N pilot symbols correspond to one antenna port, the plurality of pilot symbols in the N pilot symbols are generated based on the at least one Gray complementary sequence pair.

When the N pilot symbols correspond to a plurality of antenna ports, for example, when a part of the pilot symbols correspond to an antenna port 1, and the other part of the pilot symbols correspond to a plurality of antenna ports, a plurality of pilot symbols corresponding to the same antenna port are generated based on the at least one Gray complementary sequence pair. Gray complementary sequences carried in at least two adjacent pilot symbols in the N pilot symbols do not necessarily form a Gray complementary sequence pair, because different pilot symbols in the at least two adjacent pilot symbols may separately correspond to different antenna ports.

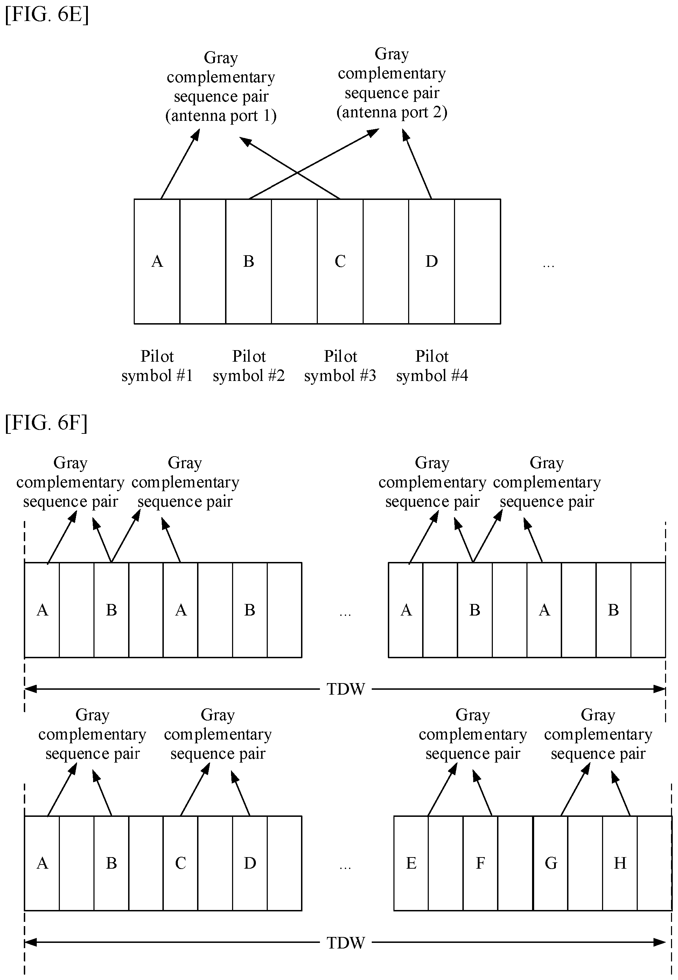

For example, as shown in FIG. 6E, a Gray complementary sequence carried in a pilot symbol #1 is a sequence A, a Gray complementary sequence carried in a pilot symbol #2 is a sequence B, a Gray complementary sequence carried in a pilot symbol #3 is a sequence C, and a Gray complementary sequence carried in a pilot symbol #4 is a sequence D. The pilot symbol #1 and the pilot symbol #3 correspond to the antenna port 1, sequences A and C form a Gray complementary sequence pair, the pilot symbol #2 and the pilot symbol #4 correspond to the antenna port 2, and sequences B and D form a Gray complementary sequence pair.

In this design manner, a case of a plurality of antenna ports is considered, and therefore, the solution offers higher applicability.

In a possible design, different pilot symbols in at least two pilot symbols (or at least two pilot symbols carrying Gray complementary sequences that form a Gray complementary sequence pair) generated based on a same Gray complementary sequence pair occupy a same frequency domain bandwidth.

For example, a sequence A and a sequence B form a Gray complementary sequence pair, and the first communication device generates a pilot symbol #1 and a pilot symbol #2 based on the sequence A and the sequence B respectively. In this case, the pilot symbol #1 and the pilot symbol #2 occupy a same frequency domain bandwidth.

This helps a receive end (for example, a second communication device) of the pilot symbol perform (joint) channel estimation based on the Gray complementary sequence pair, to improve the channel estimation quality.

In a possible design, the N pilot symbols are within a time-domain window (time-domain window, TDW). The TDW is a time block used for (joint) pilot enhancement processing. In other words, the receive end (for example, the second communication device) of the pilot symbol may perform (joint) channel estimation on the pilot symbol within the TDW. There is no uplink-downlink switching within the TDW, and/or symbol transmission within the TDW meets requirements for phase continuity and power continuity.

Specifically, in this embodiment of this application, the TDW is taken as a granularity, and sequences carried in pilot symbols within the TDW may form a Gray complementary sequence pair, or in other words, sequences carried in pilot symbols within a same TDW are generated based on a Gray complementary sequence pair, as shown in FIG. 6F.

Optionally, sequences carried in pilot symbols within different TDWs may not form a Gray complementary sequence pair.

Optionally, the sequence carried in the pilot symbol within the TDW and a sequence carried in a pilot symbol outside the TDW may not form a Gray complementary sequence pair.

Optionally, sequences carried in pilot symbols outside the TDW may not form a Gray complementary sequence pair.

In some embodiments, a length of the TDW (namely, a quantity of pilot symbols within the TDW, that is, N) is preconfigured (for example, agreed on in a protocol) or configured through signaling. This is not limited in embodiments of this application.

In this design manner, it is constrained that the pilot symbol is generated within the TDW based on the Gray complementary sequence pair. This design manner is applicable to a (joint) channel estimation scenario. Because a plurality of pilot symbols are required in the (joint) channel estimation scenario, a waste of pilot overheads can be avoided.

In a possible design, the N pilot symbols are located in a first sub-block, and the first sub-block corresponds to a segment of time-domain resources and/or frequency-domain resources.

Specifically, in this embodiment of this application, a sub-block is taken as a granularity, and sequences carried in pilot symbols in a same sub-block may form a Gray complementary sequence pair, or in other words, sequences carried in pilot symbols in the same sub-block are generated based on a Gray complementary sequence pair. Sequences carried in pilot symbols in different sub-blocks may not form a Gray complementary sequence pair.

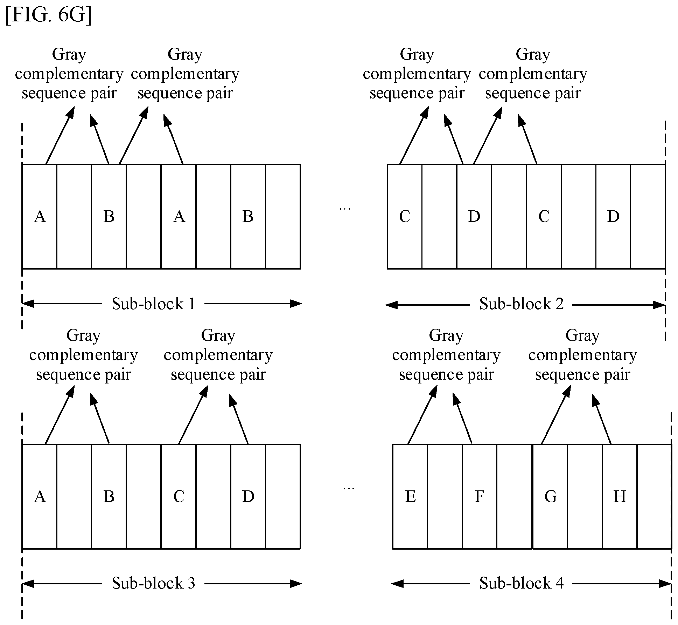

For example, as shown in FIG. 6G, sequences A and B carried in pilot symbols in a sub-block 1 may form a Gray complementary sequence pair, and sequences C and D carried in pilot symbols in a sub-block 2 may form a Gray complementary sequence pair, but the sequence A/B carried in the pilot symbol in the sub-block 1 and the sequence C/D carried in the pilot symbol in the sub-block 2 may not form a Gray complementary sequence pair. Sequences A and B carried in pilot symbols in a sub-block 3 may form a Gray complementary sequence pair, sequences C and D may form a Gray complementary sequence pair, sequences E and F carried in pilot symbols in a sub-block 4 may form a Gray complementary sequence pair, sequences D and H may form a Gray complementary sequence pair, and the sequence A/B/C/D carried in the pilot symbol in the sub-block 3 and the sequence E/F/G/H carried in the pilot symbol in the sub-block 4 may not form a Gray complementary sequence pair.

It may be understood that the sub-block may alternatively be replaced with another name, for example, a time-domain sub-window, that can correspond to the segment of time-domain resources and/or frequency-domain resources.

This is not limited in this embodiment of this application.

In some embodiments, a length of the sub-block (namely, a quantity of pilot symbols in the sub-block, that is, N) is preconfigured (for example, agreed on in a protocol) or configured through signaling. This is not limited in embodiments of this application.

In this design manner, it is constrained that a Gray complementary sequence pair is used to generate a pilot symbol in the sub-block, and therefore, the solution is more flexible.

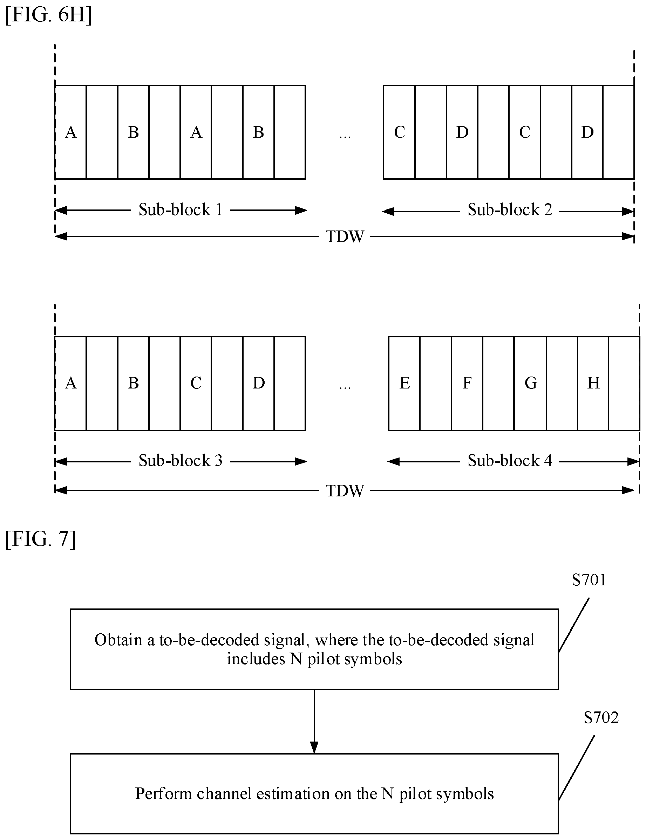

In a possible design, the sub-block is located within the TDW, as shown in FIG. 6H. It may be understood that one or more sub-blocks may be included within one TDW.

In this design manner, it is merely constrained that a Gray complementary sequence pair is used to generate a part of pilot symbols within the TDW (that is, pilot symbols in the sub-block), but a pilot requirement of an entire TDW is not constrained, so that both a quantity of available pilots and a signal processing speed can be achieved.

In a possible design, the N pilot symbols are scheduled through one piece of PDCCH signaling or DCI signaling; the N pilot symbols are respectively scheduled through N pieces of PDCCH signaling or DCI signaling; or the N pilot symbols are scheduled through a pieces of PDCCH signaling or DCI signaling, where a is a positive integer less than N. This is not limited in embodiments of this application.

The foregoing describes the pilot transmission method on a first communication device side. The following describes a pilot transmission method on a second communication device side.

Refer to FIG. 7. An embodiment of this application further provides a pilot transmission method. The method may be performed by a second communication device. Unless otherwise specified, the "second communication device" in this application may refer to the second communication device (for example, the network device or the terminal device shown in FIG. 2), may be a component (for example, a processor, a chip, or a chip system) in the second communication device, or may be a logic module or software that can implement all or a part of functions of the second communication device. The method includes the following steps.

S701: Obtain a to-be-decoded signal, where the to-be-decoded signal includes N pilot symbols. A plurality of pilot symbols in the N pilot symbols are generated based on at least one Gray complementary sequence pair, each of the at least one Gray complementary sequence pair includes at least two Gray complementary sequences, and N is a positive integer greater than 1.

For a specific design of the N pilot symbols, refer to the foregoing related descriptions of the first communication device side. Details are not described herein again.

S702: Perform channel estimation on the N pilot symbols.

In some embodiments, the second communication device may perform channel estimation on the N pilots separately.

In some other embodiments, the second communication device may perform (joint) channel estimation on the plurality of pilot symbols in the N pilot symbols.

For example, a processing process in which the second communication device performs (joint) channel estimation on the plurality of pilot symbols in the N pilot symbols may include the following steps.

1. The second communication device obtains a signal sent by a first communication device, and performs operations such as CP removal and IFFT, to obtain the N pilot symbols.

2. Perform (joint) channel estimation processing on at least two pilot symbols that are in the N pilot symbols and that correspond to a same Gray complementary sequence pair (or at least two pilot symbols that are generated based on a same Gray complementary sequence pair, or at least two pilot symbols carrying Gray complementary sequences that may form a Gray complementary sequence pair).

3. The second communication device extracts channel estimation performance.

4. The second communication device performs equalization on the symbols, to obtain a recovered signal.

5. Perform an operation such as decoding on the recovered signal.

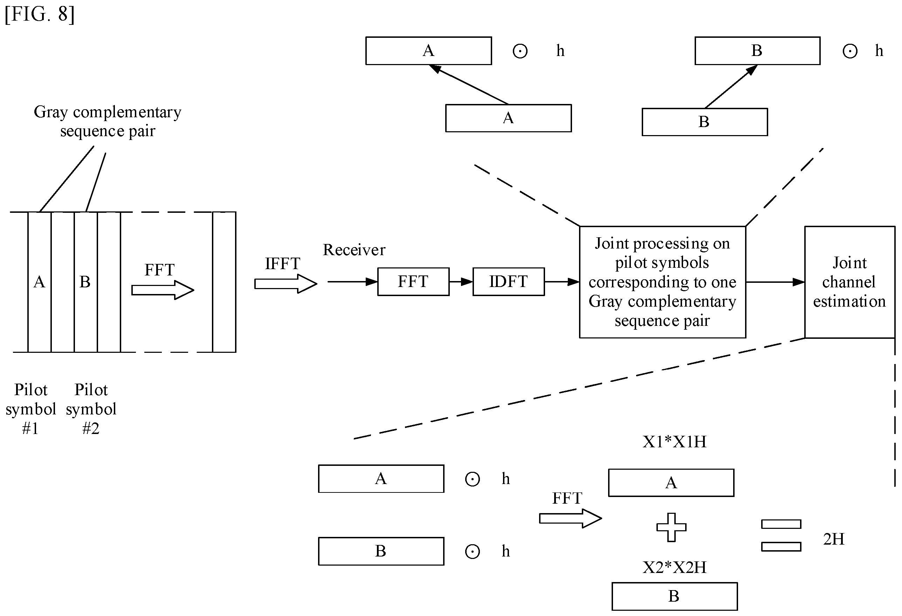

An example in which (joint) channel estimation is performed on two adjacent pilots is used. As shown in FIG. 8, a specific implementation method of step 2 may be as follows:

(1) The second communication device receives time domain pilot symbols y1 and y2, which correspond to pilot symbols x1 and x2 that arrive at a receiver through a channel. Received signals may be represented as: $y1 = h \odot x1 + n$, and $y2 = h \odot x2 + n$, where $\odot$ represents circular convolution, and n is noise. The noise is ignored subsequently.

(2) Perform FFT on the time domain pilot symbols y1 and y2 to obtain frequency domain received signals:

$$Y1 = FFT(y1) = HX1; \text{ and } Y2 = FFT(y2) = HX2$$

X1 is a frequency domain signal of a pilot symbol #1, and X2 is a frequency domain signal of a pilot symbol #2. The pilot symbol #1 and the pilot symbol #2 are generated based on a Gray complementary sequence pair (in a generation process, another operation such as zero-padding, replication, or multiplication by a pulse shaping filter).

(3) An operation of multiplying Y1 and Y2 by conjugates of the known signals X1 and X2 and perform adding:

$$X1*Y1+X2*Y1=X1*X1H+X2*X2H=AH$$

Because X1 and X2 are generated based on the Gray complementary sequence pair (for example, A and B), any subcarrier in frequency domain has the following property:

$$X1(n)*X1(n)+X2(n)*X2(n)=A(n)$$

n represents a frequency domain subcarrier index. Generally, if no another operation such as zero-padding, replication, or multiplication by a pulse shaping filter, for any n, A(n)=2. However, it is considered that the another operation such as zero-padding, replication, or multiplication by a pulse shaping filter may be performed. In this case, A(n) is not necessarily strictly equal to 2, but the second communication device considers that a coefficient A multiplied by frequency domain data is the same. That is, for a data signal within a TDW, there is a frequency domain received signal:

$$Y3=AHX3$$

Therefore, AH obtained based on the operation of multiplying Y1 and Y2 by the conjugates of the known signals X1 and X2 and perform adding may be used to equalize Y3, to obtain a sent data signal X3.

(1) to (3) are a process of (joint) channel estimation performed based on one Gray complementary sequence pair. During actual application, it may be further considered that there may be a plurality of Gray complementary pairs, and (joint) channel estimation is performed based on the plurality of Gray complementary sequence pairs. For example:

Case 1: If a Gray complementary sequence is [A B A B], and all As and Bs are the same, a processing process may be as follows:

As and Bs are first separately summed to jointly obtain [A, B], and then the foregoing operation of one Gray complementary sequence pair is performed.

Case 2: If a Gray complementary sequence is [A B C D], and different Gray complementary sequence pairs are different, a processing process is as follows:

The foregoing processing is first performed on each Gray complementary sequence pair. For example, [A B] is generated based on a Gray complementary sequence pair, and AH1 is obtained through processing; and [C D] is generated based on a Gray complementary sequence pair, and AH2 is obtained through processing. Subsequently, two processing results (namely, AH1 and AH2) are summed to obtain AH.

Processing complexity in Case 2 is higher. However, in Case 2, because a sequence correlation is weaker, in a scenario in which there is interference between different cells, an anti-interference capability may be stronger.

In the foregoing solution, the pilot symbol received by the second communication device is generated based on the Gray complementary sequence pair, has a low PAPR, and has good flatness in frequency domain. Therefore, channel estimation quality is high. In addition, in the foregoing solution, (joint) channel estimation processing may be performed based on the Gray complementary sequence pair, to further improve the channel estimation quality.

The methods provided in embodiments of this application are described above with reference to the accompanying drawings. The following describes apparatuses provided in embodiments of this application with reference to the accompanying drawings.

Based on a same technical concept, an embodiment of this application provides a communication apparatus 900. The apparatus 900 may be, for example, a satellite, a base station, a terminal, an access point, or a chip inside a satellite, a base station, a terminal, or an access point. The apparatus 900 includes corresponding modules, units, or means (means) for performing the method steps in the foregoing method embodiments. The functions, units, or means may be implemented by software, may be implemented by hardware, or may be implemented by hardware executing corresponding software.

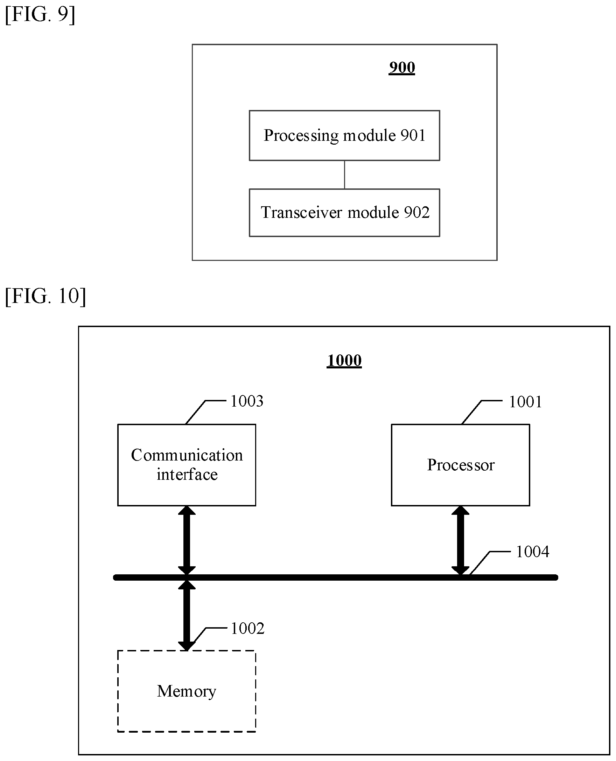

For example, with reference to FIG. 9, the apparatus 900 may include a processing module 901 and a transceiver module 902.

When the apparatus 900 is located in a first communication device:

the processing module 901 is configured to generate N pilot symbols, where a plurality of pilot symbols in the N pilot symbols are generated based on at least one Gray complementary sequence pair, each of the at least one Gray complementary sequence pair includes at least two Gray complementary sequences, and N is a positive integer greater than 1; and

the transceiver module 902 is configured to output the N pilot symbols.

When the apparatus 900 is located in a second communication device,

the transceiver module 902 is configured to obtain a to-be-decoded signal, where the to-be-decoded signal includes N pilot symbols, a plurality of pilot symbols in the N pilot symbols are generated based on at least one Gray complementary sequence pair, each of the at least one Gray complementary sequence pair includes at least two Gray complementary sequences, and N is a positive integer greater than 1; and

the processing module 901 is configured to perform channel estimation on the N pilot symbols. It should be understood that all related content of the steps in the foregoing method embodiments may be cited in function descriptions of a corresponding functional module. Details are not described herein again.

Based on a same technical concept, as shown in FIG. 10, an embodiment of this application further provides a communication apparatus 1000, including:

at least one processor 1001 and a communication interface 1003 that is communicatively connected to the at least one processor 1001, where the at least one processor 1001 executes instructions stored in a memory 1002, so that the apparatus is enabled to perform the method steps in the foregoing method embodiments through the communication interface 1003.

Optionally, the memory 1002 is located outside the apparatus 1000.

Optionally, the apparatus 1000 includes the memory 1002. The memory 1002 is connected to the at least one processor 1001, and the memory 1002 stores the instructions that can be executed by the at least one processor 1001. In FIG. 10, a dashed line indicates that the memory 1002 is optional for the apparatus 1000.

The processor 1001 and the memory 1002 may be coupled through an interface circuit, or may be integrated together. This is not limited herein.

A specific connection medium between the processor 1001, the memory 1002, and the communication interface 1003 is not limited in embodiments of this application. In this embodiment of this application, the processor 1001, the memory 1002, and the communication interface 1003 are connected through a bus 1004 in FIG. 10. The bus is represented by a bold line in FIG. 10. A manner of connection between other components is merely an example for description, and is not limited thereto. The bus may be classified into an address bus, a data bus, a control bus, and the like. For ease of representation, only one bold line is used for representing the bus in FIG. 10, but this does not mean that there is only one bus or only one type of bus.

The specific connection medium between the processor 1001, the memory 1002, and the communication interface 1003 is not limited in embodiments of this application. In this embodiment of this application, the processor 1001, the memory 1002, and the communication interface 1003 are connected through the bus 1004 in FIG. 10. The bus is represented by the bold line in FIG. 10. The manner of connection between other components is merely an example for description, and is not limited thereto. The bus may be classified into the address bus, the data bus, the control bus, and the like. For ease of representation, only one bold line is used for representing the bus in FIG. 10, but this does not mean that there is only one bus or only one type of bus.

It should be understood that the processor mentioned in embodiments of this application may be implemented by hardware or software. When the processor is implemented by hardware, the processor may be a logic circuit, an integrated circuit, or the like. When the processor is implemented by software, the processor may be a general-purpose processor, and is implemented by reading software code stored in a memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a discrete gate or a transistor logic device, or a discrete hardware component. The general-purpose processor may be a microprocessor, or the processor may be any conventional processor or the like.

It should be understood that the memory mentioned in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through an example rather than a limitative description, a plurality of forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor. It should be noted that the memory described in this specification is intended to include but is not limited to these memories and any memory of another proper type.

Based on a same technical concept, an embodiment of this application further provides a computer-readable storage medium, including a program or instructions. When the program or the instructions are run on a computer, the method in the foregoing method embodiments is performed. Based on a same technical concept, an embodiment of this application further provides a computer program product, including instructions. When the instructions are run on a computer, the method in the foregoing method embodiments is performed.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can instruct the computer or the another programmable data processing device to operate in a specific manner, so that the instructions stored in the computer-readable memory generate an artifact including an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

## Claims

1. A pilot transmission method, comprising:

   generating N pilot symbols, wherein a plurality of pilot symbols in the N pilot symbols are generated based on at least one Gray complementary sequence pair, each of the at least one Gray complementary sequence pair comprises at least two Gray complementary sequences, and N is a positive integer greater than 1; and
   outputting the N pilot symbols.

2. The method according to claim 1, wherein the Gray complementary sequences carried in at least two adjacent pilot symbols in the N pilot symbols form the Gray complementary sequence pair.

3. The method according to claim 1 or 2, wherein that the plurality of pilot symbols in the N pilot symbols are generated based on the at least one Gray complementary sequence pair comprises:
   the plurality of pilot symbols corresponding to a same antenna port in the N pilot symbols are generated based on the at least one Gray complementary sequence pair.

4. The method according to claim 1 or 2, wherein

the Gray complementary sequence carried in an $(i-1)^{th}$ pilot symbol in the N pilot symbols and the Gray complementary sequence carried in an $i^{th}$ pilot symbol form a first Gray complementary sequence pair;

the Gray complementary sequence carried in the $i^{th}$ pilot symbol in the N pilot symbols and the Gray complementary sequence carried in an $(i+1)^{th}$ pilot symbol form a second Gray complementary sequence pair; and

the at least one Gray complementary sequence pair comprises the first Gray complementary sequence pair and the second Gray complementary sequence pair, and i is a positive integer.

5. The method according to claim 1 or 2, wherein

the Gray complementary sequence carried in an $(i-1)^{th}$ pilot symbol in the N pilot symbols and the Gray complementary sequence carried in an $i^{th}$ pilot symbol form a third Gray complementary sequence;

the Gray complementary sequence carried in an $(i+1)^{th}$ pilot symbol in the N pilot symbols and the Gray complementary sequence carried in an $(i+2)^{th}$ pilot symbol form a fourth Gray complementary sequence;

the Gray complementary sequence carried in the $i^{th}$ pilot symbol and the Gray complementary sequence carried in the $(i+1)^{th}$ pilot symbol do not form the Gray complementary sequence pair; and

i is a positive integer.

6. The method according to any one of claims 1 to 5, wherein the N pilot symbols

further comprise a first pilot symbol; and

the first pilot symbol carries a Gold Gold sequence; or

the Gray complementary sequence carried in the first pilot symbol and the Gray complementary sequence carried in a previous or next pilot symbol adjacent to the first pilot symbol form the Gray complementary sequence pair.

7. The method according to any one of claims 1 to 6, wherein the N pilot symbols are located in a first sub-block, and the first sub-block corresponds to a segment of time-domain resources and/or frequency-domain resources.

8. The method according to any one of claims 1 to 7, wherein the N pilot symbols

are within a time-domain window TDW; and

there is no uplink-downlink switching within the TDW, and/or symbol transmission within the TDW meets requirements for phase continuity and power continuity.

9. The method according to any one of claims 1 to 8, wherein

the N pilot symbols are scheduled by using one piece of physical downlink control channel PDCCH signaling or downlink control information DCI signaling;

the N pilot symbols are respectively scheduled by using N pieces of PDCCH signaling or DCI signaling; or

the N pilot symbols are scheduled by using a pieces of PDCCH signaling or DCI signaling, wherein a is a positive integer less than N.

10. The method according to any one of claims 1 to 9, wherein the N pilot symbols correspond to a same antenna port.

11. A pilot transmission method, comprising:

obtaining a to-be-decoded signal, wherein the to-be-decoded signal comprises N pilot symbols, a plurality of pilot symbols in the N pilot symbols are generated based on at least one Gray complementary sequence pair, each of the at least one Gray complementary sequence pair comprises at least two Gray complementary sequences, and N is a positive integer greater than 1; and

performing channel estimation on the N pilot symbols.

12. The method according to claim 11, wherein the Gray complementary sequences carried in at least two adjacent pilot symbols in the N pilot symbols form the Gray complementary sequence pair.

13. The method according to claim 11 or 12, wherein that the plurality of pilot symbols in the N pilot symbols are generated based on the at least one Gray complementary sequence pair comprises:

the plurality of pilot symbols corresponding to a same antenna port in the N pilot symbols are generated based on the at least one Gray complementary sequence pair.

14. The method according to claim 11 or 12, wherein

the Gray complementary sequence carried in an $(i-1)^{th}$ pilot symbol in the N pilot symbols and the Gray complementary sequence carried in an $i^{th}$ pilot symbol form a first Gray complementary sequence pair;
the Gray complementary sequence carried in the $i^{th}$ pilot symbol in the N pilot symbols and the Gray complementary sequence carried in an $(i+1)^{th}$ pilot symbol form a second Gray complementary sequence pair; and
the at least one Gray complementary sequence pair comprises the first Gray complementary sequence pair and the second Gray complementary sequence pair, and i is a positive integer.

15. The method according to claim 11 or 12, wherein

the Gray complementary sequence carried in an $(i-1)^{th}$ pilot symbol in the N pilot symbols and the Gray complementary sequence carried in an $i^{th}$ pilot symbol form a third Gray complementary sequence;
the Gray complementary sequence carried in an $(i+1)^{th}$ pilot symbol in the N pilot symbols and the Gray complementary sequence carried in an $(i+2)^{th}$ pilot symbol form a fourth Gray complementary sequence;
the Gray complementary sequence carried in the $i^{th}$ pilot symbol and the Gray complementary sequence carried in the $(i+1)^{th}$ pilot symbol do not form the Gray complementary sequence pair; and
i is a positive integer.

16. The method according to any one of claims 11 to 15, wherein the N pilot symbols

further comprise a first pilot symbol; and
the first pilot symbol carries a Gold Gold sequence; or
the Gray complementary sequence carried in the first pilot symbol and the Gray complementary sequence carried in a previous or next pilot symbol adjacent to the first pilot symbol form the Gray complementary sequence pair.

17. The method according to any one of claims 11 to 16, wherein the N pilot symbols are located in a first sub-block, and the first sub-block corresponds to a segment of time-domain resources and/or frequency-domain resources.

18. The method according to any one of claims 11 to 17, wherein the N pilot symbols are within a time-domain window TDW; and
there is no uplink-downlink switching within the TDW, and/or symbol transmission within the TDW meets requirements for phase continuity and power continuity.

19. The method according to any one of claims 11 to 18, wherein

the N pilot symbols are scheduled by using one piece of physical downlink control channel PDCCH signaling or downlink control information DCI signaling;
the N pilot symbols are respectively scheduled by using N pieces of PDCCH signaling or DCI signaling; or
the N pilot symbols are scheduled by using a pieces of PDCCH signaling or DCI signaling, wherein a is a positive integer less than N.

20. The method according to any one of claims 11 to 19, wherein the N pilot symbols correspond to a same antenna port.

21. A communication apparatus, comprising:

a processing module, configured to generate N pilot symbols, wherein a plurality of pilot symbols in the N pilot symbols are generated based on at least one Gray complementary sequence pair, each of the at least one Gray complementary sequence pair comprises at least two Gray complementary sequences, and N is a positive integer greater than 1; and
a transceiver module, configured to output the N pilot symbols.

22. A communication apparatus, comprising:

a transceiver module, configured to obtain a to-be-decoded signal, wherein the to-be-decoded signal comprises N pilot symbols, a plurality of pilot symbols in the N pilot symbols are generated based on at least one Gray complementary sequence pair, each of the at least one Gray complementary sequence pair comprises at least two Gray complementary sequences, and N is a positive integer greater than 1; and

a processing module, configured to perform channel estimation on the N pilot symbols.

23. A communication apparatus, comprising a processor and an interface circuit, wherein the interface circuit is electrically coupled to the processor, and the processor performs, through a logic circuit or by executing code instructions, the method according to any one of claims 1 to 10 or the method according to any one of claims 11 to 20.

24. A computer-readable storage medium, wherein the storage medium stores a computer program or instructions, and when the computer program or the instructions are run, the method according to any one of claims 1 to 10 or the method according to any one of claims 11 to 20 is performed.

25. A computer program product, comprising instructions, wherein when the instructions are run on a computer, the method according to any one of claims 1 to 10 or the method according to any one of claims 11 to 20 is performed.

EP 4 779 938 A1

[FIG. 1]

[FIG. 2]

[FIG. 3]

S301

Generate N pilot symbols, where a plurality of pilot symbols in the N pilot symbols are generated based on at least one Gray complementary sequence pair, and N is a positive integer greater than 1

S302

Output the N pilot symbols

[FIG. 4A]

...

DMRS pilot symbol

[FIG. 4B]

...

Data symbol or another pilot symbol

DMRS pilot symbol

[FIG. 5A]

[FIG. 5B]

Gold sequence

Gray complementary sequence

[FIG. 6A]

First Gray
complementary
sequence pair

Second Gray
complementary
sequence pair

| A | | B | | A | | B | | ... |
|---|---|---|---|---|---|---|---|---|

Pilot
symbol #1

Pilot
symbol #2

Pilot
symbol #3

Pilot
symbol #4

[FIG. 6B]

First Gray
complementary
sequence pair

Second Gray
complementary
sequence pair

| A | | B | | C | | D | | ... |
|---|---|---|---|---|---|---|---|---|

Pilot
symbol #1

Pilot
symbol #2

Pilot
symbol #3

Pilot
symbol #4

[FIG. 6C]

[FIG. 6D]

Gray complementary sequence pair    Gray complementary sequence pair    Gray complementary sequence pair    Gold sequence

| A | | B | | C | | D | | E | | F | G |

◄——————————— 2P pilot symbols ———————————►

First pilot symbol

(1)

Gray complementary sequence pair    Gray complementary sequence pair    Gray complementary sequence pair    Gray complementary sequence pair

| A | | B | | C | | D | | E | | F | G |

◄——————————— 2P pilot symbols ———————————►

First pilot symbol

(2)

[FIG. 6E]

[FIG. 6F]

[FIG. 6G]

[FIG. 6H]

| A | B | A | B | ... | C | D | C | D |

|← Sub-block 1 →| |← Sub-block 2 →|

|← TDW →|

| A | B | C | D | ... | E | F | G | H |

|← Sub-block 3 →| |← Sub-block 4 →|

|← TDW →|

[FIG. 7]

S701

| Obtain a to-be-decoded signal, where the to-be-decoded signal includes N pilot symbols |

S702

| Perform channel estimation on the N pilot symbols |

[FIG. 8]

EP 4 779 938 A1

[FIG. 9]

**900**

Processing module 901

Transceiver module 902

[FIG. 10]

**1000**

1003

Communication interface

1001

Processor

1004

1002

Memory

## INTERNATIONAL SEARCH REPORT

| International application No. |
|---|
| **PCT/CN2023/122491** |

**A. CLASSIFICATION OF SUBJECT MATTER**

H04L 27/26(2006.01)i; H04W 72/12(2023.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNABS; CNTXT; CNKI; VEN; DWPI; USTXT; EPTXT; WOTXT; 3GPP: 导频, 参考信号, 格雷, 互补, 序列, 序列对, 时域, 天线, 信道估计, pilot, Reference Signal, RS, Golay, complementary, sequence

**C. DOCUMENTS CONSIDERED TO BE RELEVANT**

| Category* | Citation of document, with indication, where appropriate, of the relevant passages | Relevant to claim No. |
|---|---|---|
| X | WO 2021128299 A1 (HUAWEI TECHNOLOGIES CO., LTD.) 01 July 2021 (2021-07-01) description, page 17, line 17 to page 37, line 16 | 1-25 |
| X | US 2021067391 A1 (INTEL CORP.) 04 March 2021 (2021-03-04) description, paragraphs [0176]-[0252] | 1-25 |
| X | CN 104243370 A (INSTITUTE OF INFORMATION ENGINEERING, CAS) 24 December 2014 (2014-12-24) description, paragraphs [0051]-[0066] | 1-25 |
| A | CN 109219134 A (HUAWEI TECHNOLOGIES CO., LTD.) 15 January 2019 (2019-01-15) entire document | 1-25 |
| A | CN 101447962 A (HUAWEI TECHNOLOGIES CO., LTD. et al.) 03 June 2009 (2009-06-03) entire document | 1-25 |
| A | CN 111865517 A (HUAWEI TECHNOLOGIES CO., LTD.) 30 October 2020 (2020-10-30) entire document | 1-25 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 May 2024** | **17 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

# EP 4 779 938 A1

**INTERNATIONAL SEARCH REPORT**
Information on patent family members

International application No.

**PCT/CN2023/122491**

| Patent document cited in search report | | | Publication date (day/month/year) | Patent family member(s) | | | Publication date (day/month/year) |
|---|---|---|---|---|---|---|---|
| WO | 2021128299 | A1 | 01 July 2021 | US | 2022337461 | A1 | 20 October 2022 |
| | | | | CA | 3163202 | A1 | 01 July 2021 |
| | | | | EP | 4068892 | A1 | 05 October 2022 |
| | | | | EP | 4068892 | A4 | 01 March 2023 |
| | | | | CN | 114902774 | A | 12 August 2022 |
| US | 2021067391 | A1 | 04 March 2021 | None | | | |
| CN | 104243370 | A | 24 December 2014 | CN | 104243370 | B | 30 June 2017 |
| CN | 109219134 | A | 15 January 2019 | US | 2020059335 | A1 | 20 February 2020 |
| | | | | US | 11184131 | B2 | 23 November 2021 |
| | | | | WO | 2019001287 | A1 | 03 January 2019 |
| | | | | EP | 3595385 | A1 | 15 January 2020 |
| | | | | EP | 3595385 | A4 | 25 March 2020 |
| | | | | EP | 3595385 | B1 | 11 August 2021 |
| CN | 101447962 | A | 03 June 2009 | CN | 101447962 | B | 08 June 2011 |
| CN | 111865517 | A | 30 October 2020 | WO | 2020216068 | A1 | 29 October 2020 |
| | | | | CN | 111865517 | B | 14 June 2022 |
| | | | | US | 2022038238 | A1 | 03 February 2022 |
| | | | | EP | 3952190 | A1 | 09 February 2022 |
| | | | | EP | 3952190 | A4 | 25 May 2022 |

Form PCT/ISA/210 (patent family annex) (July 2022)